# EUROPÄISCHE PATENTSCHRIFT

(11) **EP 1 840 352 B1**
(45) Veröffentlichungstag und Bekanntmachung des Hinweises auf die Patenterteilung: **14.12.2011**
(21) Anmeldenummer: 07104114.9
(22) Anmeldetag: 14.03.2007
(51) Int. Cl.: F02B 29/08

(54) **Frischgasanlage und Betriebsverfahren für einen Kolbenmotor**
Air intake system and method of operating for a piston engine
Système d'alimentation d'air frais et méthode d'opération pour un moteur à piston

(30) Priorität: 31.03.2006 DE 102006015589
(43) Veröffentlichungstag der Anmeldung: 03.10.2007
(73) Patentinhaber: Mahle International GmbH, 70376 Stuttgart (DE)
(72) Erfinder: Elsässer, Alfred, Dr., 75210, Keltern (DE); Dingelstadt, René, 70374, Stuttgart (DE)
(74) Vertreter: BRP Renaud & Partner

(56) Entgegenhaltungen:
- EP-A1- 0 547 566
- WO-A1-2004/055345
- WO-A1-2005/035955
- DE-A1- 3 737 824
- DE-A1- 4 308 931
- DE-A1- 10 032 669
- DE-A1- 10 220 076
- DE-A1- 10 240 913
- DE-A1-102006 028 280
- US-A1- 2004 159 721

## Beschreibung

Die vorliegende Erfindung betrifft eine Frischgasanlage für einen Kolbenmotor, insbesondere in einem Kraftfahrzeug, mit den Merkmalen des Oberbegriffs des Anspruchs 1. Die Erfindung betrifft außerdem ein Betriebsverfahren für einen mit einer derartigen Frischgasanlage ausgestatteten Kolbenmotor.

Aus der EP 0 547 566 B1 ist eine Frischgasanlage für einen Kolbenmotor bekannt, die mit einer Sammelleitung zur Versorgung mehrerer Einzelleitungen mit Frischgas ausgestattet ist. Jede Einzelleitung versorgt jeweils einen Brennraum des Kolbenmotors mit Frischgas, wobei jedem Zylinder des Kolbenmotors ein Einlassventil zum Öffnen und Schließen einer Verbindung zwischen dem zugehörigen Brennraum und der zugehörigen Einzelleitung zugeordnet ist. Desweiteren ist in jeder Einzelleitung stromauf des Einlassventils ein Zusatzventil angeordnet, mit dem die jeweilige Einzelleitung geöffnet und geschlossen werden kann.

Bei der bekannten Frischgasanlage kann mit Hilfe der Zusatzventile die Frischgasversorgung der Brennräume so beeinflusst werden, dass sich im jeweiligen Zylinder eine Temperaturerhöhung einstellt, die über die adiabate Verdichtungsendtemperatur hinausgeht. Dieses Betriebsverfahren des Kolbenmotors kann auch als Wärmeladung bezeichnet werden.

Aus der DE 43 08 931 C2 ist für einen Kolbenmotor ein Betriebsverfahren bekannt, das als Impulsaufladung bezeichnet wird. Hierzu wird beim jeweiligen Brennraum das zugehörige Einlassventil während eines Einlasshubs des zugehörigen Kolbens kurzzeitig geschlossen. Die hierbei auftretenden dynamischen Strömungseffekte führen zur gewünschten Impulsaufladung des jeweiligen Brennraums.

Ein weiteres Ausführungsbeispiel eines Kolbenmotors mit Impulsaufladung kann der WO 2005/0359 55 A1 entnommen werden.

Desweiteren ist es beispielsweise aus Pischinger "variable Ventilsteuerung II", Expertverlag, Seiten 244 bis 260, bekannt, bei einem Kolbenmotor die Frischgasanlage stromauf von Einlassventilen zu entdrosseln, wobei zur Realisierung der vom jeweiligen Lastzustand des Kolbenmotors abhängigen Frischgasbeladung die Öffnungs- und Schließzeiten der Einlassventile entsprechend adaptiert werden. Dabei ist es insbesondere bekannt, während eines Einlasshubs des jeweiligen Kolbens für das jeweilige Einlassventil zwei Einlasszeitfenster zu realisieren, von denen das erste am Anfang des Einlasshubs liegt, während das zweite am Ende des Einlasshubs liegt. Die entdrosselte oder drosselfreie Frischgasanlage ist durch das Fehlen einer Drosselklappe charakterisiert, die sich bei einer herkömmlichen Frischgasanlage in der Sammelleitung befindet, um im Teillastbetrieb des Kolbenmotors die Frischgasversorgung der Brennräume in Abhängigkeit des aktuellen Lastzustands des Kolbenmotors zu drosseln. Die gedrosselte Frischgasversorgung ist problematisch, da erhebliche Ladungswechselverluste entstehen und da die damit einhergehenden reduzierten Strömungsgeschwindigkeiten die Gemischbildung behindern. Darunter leidet die Qualität des Verbrennungsvorgangs und führt zu vergleichsweise schlechten Emissionswerten und erhöhten Kraftstoffverbrauchswerten. Bei einer drosselfreien oder entdrosselten Frischgasversorgung lässt sich die Qualität des Verbrennungsvorgangs signifikant verbessern, was in reduzierten Emissionen und Kraftstoffverbrauchswerten resultiert.

Um die gewünschte Steuerung der Frischgasbeladung, also die Frischgasmengensteuerung bei entdrosselter Frischgasanlage realisieren zu können, arbeitet der bekannte Kolbenmotor mit einer elektromagnetischen Ventilsteuerung, die es erlaubt, die Einlassventile willkürlich zu öffnen und zu schließen. Derartige elektromagnetische Ventilsteuerungen sind jedoch erheblich teuerer als herkömmliche durch Nockenwellen gesteuerte Ventiltriebe.

Die vorliegende Erfindung beschäftigt sich mit dem Problem, für eine Frischgasanlage der eingangs genannten Art sowie für ein Betriebsverfahren der eingangs genannten Art eine verbesserte Ausführungsform anzugeben, die für den Kolbenmotor einen reduzierten Kraftstoffverbrauch ermöglicht und dabei vergleichsweise preiswert realisierbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Frischgasmengensteuerung bei einer entdrosselten Frischgasanlage mit Hilfe von in den Einzelleitungen angeordneten Zusatzventilen zu realisieren, in dem das jeweilige Zusatzventil innerhalb eines Einlasszeitfensters des jeweiligen Einlassventils vorübergehend geschlossen wird. Durch die Auswahl des jeweiligen Schließzeitpunkts und des jeweiligen Öffnungszeitpunkts des Zusatzventils lässt sich die für den jeweiligen Lastzustand des Kolbenmotors erforderliche Frischgasmenge oder Frischgasbeladung gezielt einstellen. Von besonderer Bedeutung ist dabei die Unterteilung der Frischgasbeladung in zwei Beladungsphasen, von denen die erste mit dem Schließen des Zusatzventils endet, während die zweite mit dem erneuten Öffnen des Zusatzventils beginnt. Während der ersten Beladungsphase erfolgt quasi eine Grundbeladung des jeweiligen Brennraums, die beispielsweise vorteilhaft zur Gemischbildung genutzt werden kann. Mit der zweiten Beladungsphase lässt sich vergleichsweise zeitnah zum Zündzeitpunkt ein gewünschter Strömungszustand, z.B. Drallströmung und/oder Tumbleströmung, im Brennraum erzeugen, was in Hinblick auf Schadstoffemission und Wirkungsgrad des Verbrennungsprozess von entscheidener Bedeutung ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Kolbenmotors,
- Fig. 2: ein Diagramm, in dem die Schaltzustände eines Einlassventils und eines Zusatzventils in Abhängigkeit eines Kolbenhubs wiedergegeben sind.

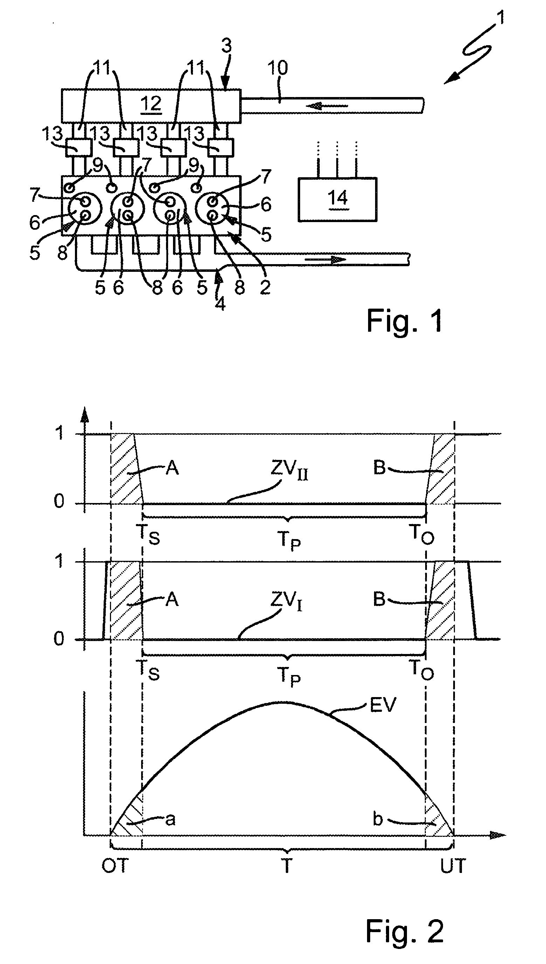

Entsprechend Fig. 1 umfasst ein Kolbenmotor 1 einen Motorblock 2, eine Frischgasanlage 3, die dem Motorblock 2 Frischgas zuführt, und eine Abgasanlage 4, die Abgas vom Motorblock 2 abführt. Der Kolbenmotor 1 ist vorzugsweise in einem Kraftfahrzeug angeordnet.

Der Motorblock 2 enthält mehrere Zylinder 5, im Beispiel sind ohne Beschränkung der Allgemeinheit vier Zylinder 5 dargestellt. Jeder Zylinder 5 umschließt einen Brennraum 6 und führt in bekannter Weise jeweils einen nicht gezeigten Kolben. Jedem Zylinder 5 ist zumindest ein Einlassventil 7 und wenigstens ein Auslassventil 8 zugeordnet. Die Einlassventile 7 sind so ausgestaltet und angeordnet, dass sie in üblicher Weise die kommunizierende Verbindung zwischen dem jeweiligen Einzelrohr 11 und dem jeweiligen Brennraum 6 öffnen und schließen können. Eine zugehörige Ventilsteuerung ist nicht dargestellt. Die Gaswechselventile 7, 8 können auf herkömmliche Weise mittels Nockenwellen gesteuert sein, was vergleichsweise preiswert realisierbar ist. Ebenso ist es möglich, eine elektromagnetische Ventilsteuerung vorzusehen. Desweiteren ist jedem Zylinder 5 eine Kraftstoffeinspritzdüse 9 zugeordnet, die bei entsprechender Ansteuerung Kraftstoff in den jeweiligen Brennraum 6 eindüsen kann.

Die Frischgasanlage 3 umfasst zumindest eine Sammelleitung 10, die mit mehreren Einzelleitung 11 kommunizierend verbunden ist, wobei jede Einzelleitung 11 zu einem der Brennräume 6 führt. Im vorliegenden Fall sind die Sammelleitung 10 und die Einzelleitungen 11 über einen Frischgasverteiler 12 miteinander verbunden. Bei einer anderen Ausführungsform können die Einzelleitungen 11 auch direkt an die Sammelleitung 10 angeschlossen sein.

Jede Sammelleitung 11 enthält jeweils ein Zusatzventil 13, das so ausgestaltet ist, dass es die zugehörige Einzelleitung 11 öffnen und schließen kann. Zur Betätigung der Zusatzventile 13 ist eine Steuerung 14 vorgesehen. Diese Steuerung 14 hat dabei Zugriff auf Signale oder allgemein Informationen, die es ihr ermöglichen, den aktuellen Lastzustand des Kolbenmotors 1 zu ermitteln. Der Begriff "Lastzustand" umfasst insbesondere die aktuelle Belastung und Leistungsabgabe sowie die aktuelle Drehzahl des Kolbenmotors 1. Beispielsweise ist die Steuerung 14 mit einem hier nicht gezeigten Motorsteuergerät verbunden. Ebenso kann die Steuerung 14 in ein derartiges Motorsteuergerät hardwaremäßig integriert oder softwaremäßig implementiert sein. Die Steuerung 14 kann vorzugsweise auch die Kraftstoffeinspritzdüsen 9 betätigen.

Die Abgasanlage 4 umfasst in üblicherweise nicht näher bezeichnete Einzelleitungen, sogenannte Krümmer, die hier über einen Abgassammler an eine gemeinsame Abgasleitung angeschlossen sind.

Die Frischgasanlage 3 des Kolbenmotors 1 ist entdrosselt. Das bedeutet, dass in der Frischgasanlage 3 zumindest stromauf der Zusatzventile 13 keine Einrichtung zum Drosseln der Frischgasversorgung der einzelnen Brennräume 6 enthalten ist. Allerdings kann der Kolbenmotor 1 grundsätzlich aus Sicherheitsgründen, z.B. für Notlaufeigenschaften, eine Drosseleinrichtung aufweisen, die jedoch im Normalbetrieb keine Drosselfunktion im herkömmlichen Sinne aufweist. Insbesondere enthält die Frischgasanlage 3 in ihrer Sammelleitung 3 keine Drosselklappe. In der Folge herrscht im Leitungssystem der Frischgasanlage 3 im wesentlichen Umgebungsdruck, ggf. gedrosselt durch ein Luftfilter, bzw. der durch die Ansaugung der einzelnen Zylinder 5 während eines Einlasshubs der zugehörigen Kolben erzeugte Saugdruck, sofern dieser von den Zusatzventilen 13 in das übrige Leitungssystem der Frischgasanlage 3 durchgelassen wird. Der gegebenenfalls durch besagte leichte Drosselung herrschende geringe Unterdruck ist jedenfalls betragsmäßig deutlich geringer als ein Unterdruck, der bei einem konventionellen Drosselklappensystem vorherrscht.

Fig. 2 zeigt auf der Abszisse exemplarisch einen Ausschnitt eines Kolbenhubs, nämlich eines Einlasshubs, der beim oberen Totpunkt OT des jeweiligen Kolbens beginnt und beim unteren Totpunkt UT des Kolbens endet. Auf der Ordinate sind zueinander versetzt die Verläufe des Einlassventils 7 und des Zusatzventils 13 beim jeweiligen Brennraum 6 in Abhängigkeit des Einlasshubs des jeweiligen Kolbens aufgetragen. Der Verlauf des Einlassventils 7 ist dabei mit EV bezeichnet. Für das Zusatzventil 13 sind zwei verschiedene Varianten des Verlaufs widergegeben, die mit ZV_{I} und ZV_{II} bezeichnet sind.

Das geschlossene Zusatzventil 13 wird im Diagramm jeweils durch eine Null-Linie repräsentiert, während das geöffnete Zusatzventil 13 jeweils durch eine Eins-Linie repräsentiert wird. Die Zusatzventile 13 weisen im Betrieb also nur zwei Schaltzustände "AUF" und "ZU" auf, was die Zusatzventile 13 von Drosselklappen unterscheidet.

Die Steuerung 14 ist so ausgestaltet, dass sie die Zusatzventile 13 zur Realisierung eines Betriebsverfahrens für den Kolbenmotor 1 ansteuern kann, das im folgenden näher erläutert wird.

Im Betrieb des Kolbenmotors 1 führt jeder Kolben zyklisch einen Einlasshub durch, der am oberen Totpunkt OT beginnt und am unteren Totpunkt UT endet. Das zugehörige Einlassventil 7 ist an die Kolbenbewegung gekoppelt, beispielsweise über eine Nockenwellensteuerung. Während des Einlasshubs besitzt das jeweilige Einlassventil 7 ein Einlasszeitfenster T, das in Fig. 2 durch eine geschweifte Klammer angedeutet ist. Das Einlasszeitfenster T ist an seinem Beginn durch ein Öffnen des Einlassventils 7 und an seinem Ende durch ein Schließen des Einlassventils 7 begrenzt. Ohne Beschränkung der Allgemeinheit erfolgt im vorliegenden Fall das Öffnen des Einlassventils 7 im oberen Totpunkt OT des Kolbenhubs, während das Schließen des Einlassventils 7 im unteren Totpunkt UT des Kolbens erfolgt. Im gezeigten Beispiel fällt somit das Einlasszeitfenster T mit dem Einlasshub des jeweiligen Kolbens zusammen. Der Verlauf der Öffnungs- bzw. Schließbewegung des Einlassventils 7 ist in Fig. 2 durch die Verlaufskurve EV repräsentiert.

Während des Einlasshubs des Kolbens muss der jeweilige Brennraum 6 mit Frischgas beladen werden. Die Frischgasmenge bzw. die Frischgasbeladung, die in den Brennraum 6 einzubringen ist, hängt dabei vom aktuellen Lastzustand des Kolbenmotors 1 ab.

Die Erfindung schlägt vor, bei einem Teillastbetrieb des Kolbenmotors 1 die Frischgasbeladung in zwei Beladungsphasen zu unterteilen, wobei in Fig. 2 eine zeitlich vorangehende erste Beladungsphase mit A bezeichnet ist, während eine zeitlich nachfolgende zweite Beladungsphase mit B bezeichnet ist. Um diese beiden Beladungsphasen A, B zu realisieren, wird das jeweilige Zusatzventil 13 bei geöffnetem Einlassventil 7, also innerhalb des Einlasszeitfensters T bei einem Schließzeitpunkt T_{S} geschlossen und erst bei einem späteren Öffnungszeitpunkt T_{O} wieder geöffneten, wobei der Öffnungszeitpunkt T_{O} noch innerhalb des Einlasszeitfensters T liegt. Sowohl der Schließzeitpunkt T_{S} als auch der Öffnungszeitpunkt T_{O} hängen vom aktuellen Lastzustand, also auch von der Drehzahl des Kolbenmotors 1 ab. Die erste Beladungphase A beginnt somit mit dem Öffnen des Einlassventils 7, also hier am oberen Totpunkt OT und endet mit dem Schließen des Zusatzventils 13, also zum Schließzeitpunkt T_{S}. In entsprechender Weise beginnt die zweite Beladungsphase B mit dem Öffnen des Zusatzventils 13, also zum Öffnungszeitpunkt T_{O} und endet mit dem Schließen des Einlassventils 7, also hier am unteren Totpunkt UT. Ein zeitlicher Abstand zwischen den Beladungsphasen A, B wird im folgenden auch als Beladungspause T_{P} bezeichnet. Auch die Beladungspause T_{P} hängt somit vom aktuellen Lastzustand, einschließlich Drehzahl, des Kolbenmotors 1 ab.

Die kleinste Motorlast liegt im Leerlaufbetrieb vor. Im Leerlaufbetrieb sind die Abstände zwischen dem Öffnen des Einlassventils 7 und dem Schließen des Zusatzventils 13 einerseits und dem Öffnen des Zusatzventils 13 und dem Schließen des Einlassventil 7 andererseits minimal. Gleichzeitig ist die Beladungspause T_{P} im Leerlaufbetrieb maximal. Die Beladungsphasen A, B besitzen demnach im Leerlaufbetrieb ihre kürzeste Zeitdauer. Mit zunehmender Motorlast benötigen die einzelnen Verbrennungsvorgänge mehr Frischgas, so dass mit zunehmender Motorlast zumindest eine der oder beide Beladungsphasen A, B zeitlich größer werden, während die Beladungspause T_{P} kleiner wird. Mit zunehmender Motorlast werden somit der Schließzeitpunkt T_{S} und/oder der Öffnungszeitpunkt T_{O} nach früh verschoben. Mit zunehmender Motorlast können somit entweder beide Beladungsphasen A, B durch Verschieben der Zeitpunkte T_{S}, T_{O} vergrößert werden. Oder es wird nur eine der Beladungsphasen A, B durch Verschieben eines der Zeitpunkte T_{S},T_{O} vergrößert. Bemerkenswert ist für den Teillastbetrieb des Kolbenmotors 1 mit entdrosselter Frischgasanlage 3, dass sich auch bei den sehr kurzen Beladungsphasen A, B vorteilhafte Strömungszustände einstellen. Im Volllastbetrieb ist die entdrosselte Frischgasanlage 3 besonders vorteilhaft, da sie auch bei kurzen Einlasszeitfenstern T eine ausreichende Frischgasbeladung ermöglicht.

Wie den Verlaufskurven ZV_{I}, ZV_{II} des Zusatzventils 13 zu entnehmen ist, steuert die Steuerung 14 das jeweilige Zusatzventil 13 so an, dass es zur Realisierung der ersten Beladungsphase A beim Öffnen des jeweilige Einlassventils 7 bereits geöffnet ist. Dies kann gemäß dem Verlauf ZV_{I} dadurch realisiert werden, dass das Zusatzventil 13 unmittelbar vor dem Öffnen des Einlassventils 7 geöffnet wird.

Desweiteren kann die Steuerung 14 die Zusatzventile 13 so ansteuern, dass diese zum Realisieren der zweiten Beladungsphase B beim Schließen des jeweiligen Einlassventils 7 jeweils noch offen sind. Beim Verlauf ZV_{I} wird dies dadurch erreicht, dass das Zusatzventil 13 erst unmittelbar nach dem Schließen des Einlassventils 7 schließt.

Bei der Variante mit dem Verlauf ZV_{II} wird das jeweilige Zusatzventil 13 von der Steuerung 14 so angesteuert, dass es zwischen zwei Einlasszeitfenstern T offen bleibt. D.h., das jeweilige Zusatzventil 13 bleibt nach dem Öffnen im Öffnungszeitpunkt T_{O}, zu dem die zweite Beladungsphase B beginnt, solange offen, bis es im nächsten Einlasszeitfenster T zum Schließzeitpunkt T_{S} schließt und dadurch die erste Beladungsphase A dieses neuen Einlasszeitfensters T beendet. Diese Variante kommt mit deutlich weniger Schaltvorgängen für das jeweilige Zusatzventil 13 aus, was vorteilhaft ist im Hinblick auf die Dauerhaltbarkeit der Zusatzventile 13, deren Energiebedarf sowie für die Rechnerleistung der Steuerung 14.

Die vorstehend mit Bezug auf die Verlaufskurven ZV_{I}, ZV_{II} erläuterten Ausführungsformen arbeiten mit einer Überschneidung zwischen den Öffnungsphasen des Zusatzventils 13 einerseits und der Öffnungsphase des Einlassventils 7 andererseits. Diese Überschneidungen sind in Fig. 2 als schraffierte Flächen dargestellt und mit a für die erste Beladungsphase A bzw. mit b für die zweite Beladungsphase B bezeichnet. Bemerkenswert ist, dass mit Hilfe dieser Überschneidungen a, b extrem geringe Frischgasmengen gesteuert werden können. Insbesondere lassen sich diese Überschneidungen a, b zeitlich kürzer und sogar deutlich kürzer einstellen als die minimal einstellbaren Öffnungszeitdauern für das Zusatzventil 13 bzw. für das Einlassventil 7. Somit kann die Beladung des jeweiligen Zylinders 5 im Teillastbetrieb mit sehr kleinen bis kleinsten Frischgasmengen realisiert werden. Für die erzielbaren Emissions- und Kraftstoffverbrauchswerte ergeben sich dadurch signifikante Verbesserungen.

Bei einer anderen Ausführungsform kann vorgesehen sein, dass die Steuerung 14 das jeweilige Zusatzventil 13 zur Realisierung der ersten Beladungsphase A so ansteuert, dass es beim Öffnen des jeweilige Einlassventils 7 noch geschlossen ist, so dass das Zusatzventil 13 erst innerhalb des Einlasszeitfensters T geöffnet wird. Zusätzlich oder alternativ kann die Steuerung 14 auch so ausgestaltet sein, dass sie das jeweilige Zusatzventil 13 zur Realisierung der zweiten Beladungsphase B noch innerhalb des Einlasszeitfensters T zum Schließen betätigt, so dass das jeweilige Zusatzventil 13 beim Schließen des jeweiligen Einlassventils 7 bereits geschlossen ist. Diese Ausführungsform kann im Hinblick auf bestimmte Beladungsvorgänge von Vorteil sein.

Die Beladungspause Tp kann im Teillastbetrieb des Kolbenmotors 1 wenigstens 20% oder wenigstens 30% oder wenigstens 40% oder wenigstens 50% der Zeitspanne des Einlasszeitfensters T betragen. Durch zeitlich kurze Beladungsphasen A, B kann aufgrund der entdrosselten Frischgasanlage 3 zum einen eine hinreichende Frischgasversorgung realisiert werden, während zum anderen dynamische Strömungsvorgänge realisierbar sind, welche die Gemischbildung und eine schadstoffarme und effiziente Kraftstoffumsetzung unterstützen.

Zur Realisierung des Vollastbetriebs des Kolbenmotors 1 kann im einfachsten Fall das jeweilige Zusatzventil 13 permanent geöffnet sein, so dass die zugeführte Frischgasmenge ausschließlich durch das jeweilige Einlassventil 7 gesteuert wird. Ebenso ist grundsätzlich eine Synchronisierung der Zusatzventile 13 mit dem zugehörigen Einlassventil 7 möglich, so dass diese gleichzeitig öffnen und schließen. Desweiteren ist es möglich, beim Vollastbetrieb das Zusatzventil 13 erst bei geöffnetem Einlassventil 7 zu öffnen und/oder das Einlassventil 7 erst bei geschlossenem Zusatzventil 13 zu schließen. Durch diese Ansteuerung kann die Frischgasströmung zur Beladung des jeweiligen Brennraums 6 optimiert werden.

Grundsätzlich ist es möglich, beim Vollastbetrieb eine Impulsaufladung der Brennräume 6 durch eine entsprechende Ansteuerung der Zusatzventile 13 zu realisieren.

Erfindungsgemäß ist die Steuerung 14 so ausgestaltet und so mit den Kraftstoffeinspritzdüsen 9 gekoppelt, dass sie während des Einlasszeitfensters T im jeweiligen Brennraum 6 zwei zeitlich voneinander getrennte Einspritzvorgänge realisiert. Dabei wird eine erste Einspritzmenge während der ersten Belastungsphase A (oder zwischen den beiden Beladungsphasen A, B eingedüst) , während zeitlich getrennt davon eine zweite Einspritzmenge innerhalb der zweiten Beladungsphase B eingedüst. Die erste Einspritzmenge kann aufgrund ihrer langen Verweildauer innerhalb des Brennraums 6 vergleichsweise gut mit dem Frischgas durchmischt werden. Die zweite Einspritzung erleichtert die Zündfähigkeit der gesamten Brennraumfüllung und stabilisiert dadurch den Motorbetrieb auch bei kleiner Last.

Die zweite Beladungsphase B ist zur Erzielung eines optimierten Verbrennungsprozesses von Bedeutung, da durch die späte und somit nahe am Zündzeitpunkt liegende Frischgasbefüllung eine gewünschte Strömungssituation im Brennraum 6 erzeugt werden kann, die zum Zündzeitpunkt im wesentlichen noch vorliegt. Beispielsweise kann eine Drallströmung und/oder eine Tumbleströmung erzeugt werden.

## Patentansprüche

1. Frischgasanlage für einen Kolbenmotor (1), insbesondere in einem Kraftfahrzeug,
- mit wenigstens einer Sammelleitung (10) zur Versorgung mehrerer Einzelleitungen (11) mit Frischgas,
- wobei jede Einzelleitung (11) je einen Brennraum (6) des Kolbenmotors (1) mit Frischgas versorgt,
- wobei jeder Zylinder (5) des Kolbenmotors (1) wenigstens ein Einlassventil (7) zum Öffnen und Schließen einer Verbindung zwischen dem zugehörigen Brennraum (6) und der zugehörigen Einzelleitung (11) aufweist,
- wobei in jeder Einzelleitung (11) stromauf des wenigstens einen Einlassventils (7) ein Zusatzventil (13) zum Öffnen und Schließen der Einzelleitung (11) angeordnet ist,
- wobei die wenigstens eine Sammelleitung (10) entdrosselt ist,
- wobei eine Steuerung (14) zur Betätigung der Zusatzventile (13) so ausgestaltet ist, dass sie bei einem Teillastbetrieb des Kolbenmotors (1) eine vom aktuellen Lastzustand des Kolbenmotors (1) abhängige Frischgasbeladung des jeweiligen Brennraums (6) innerhalb eines durch das Öffnen und Schließen des jeweiligen Einlassventils (7) begrenzten Einlasszeitfensters (T) **dadurch** in zwei Beladungsphasen (A, B) unterteilt, dass sie innerhalb des Einlasszeitfensters (T) das jeweilige Zusatzventil (13) bei einem vom aktuellen Lastzustand des Kolbenmotors (1) abhängigen Schließzeitpunkt (Tₛ) zum Schließen betätigt und bei einem späteren vom aktuellen Lastzustand des Kolbenmotors (1) abhängigen Öffnungszeitpunkt (Tₒ) zum Öffnen betätigt, **dadurch gekennzeichnet, dass**
- die Steuerung (14) so ausgestaltet ist, dass das jeweilige Zusatzventil (13) beim Öffnen des jeweiligen Einlassventils (7) bereits geöffnet ist und beim Schließen des jeweiligen Einlassventils (7) noch offen ist,
- wobei die Steuerung (14) so ausgestaltet ist, dass eine erste Einspritzmenge während der ersten Beladungsphase (A) und eine zweite Einspritzmenge während der zweiten Beladungsphase (B) eingedüst wird.

2. Frischgasanlage nach Anspruch 1,
**dadurch gekennzeichnet,**
**dass** die Steuerung (14) so ausgestaltet ist, dass das jeweilige Zusatzventil (13) zwischen zwei aufeinander folgenden Einlasszeitfenstern (T) des jeweiligen Einlassventils (7) offen bleibt.

3. Frischgasanlage nach einem der Ansprüche 1 und 2, **dadurch gekennzeichnet,**
- **dass** die Steuerung (14) so ausgestaltet ist, dass bei Teillastbetrieb des Kolbenmotors (1) eine durch den Schließzeitpunkt (Tₛ) und den Öffnungszeitpunkt (Tₒ) des jeweiligen Zusatzventils (13) begrenzte Beladungspause (Tp) mindest 20% oder mindestens 30% oder mindestens 40% oder mindestens 50% der Zeitspanne des Einlasszeitfensters (T) beträgt, und/oder
- **dass** die Steuerung (14) so ausgestaltet ist, dass bei einem Vollastbetrieb des Kolbenmotors (1) das jeweilige Zusatzventil (13) synchron zum jeweiligen Einlassventil (7) geöffnet und geschlossen wird oder innerhalb des Einlasszeitfensters (T) permanent geöffnet ist oder nur geöffnet wird oder nur geschlossen wird oder nur einmal geöffnet und nur einmal geschlossen wird.

4. Frischgasanlage nach einem der Ansprüche 1 bis 3,
**dadurch gekennzeichnet,**
**dass** die Steuerung (14) außerdem zur Betätigung von den Zylindern (5) zugeordneten Kraftstoffeinspritzdüsen (9) ausgestaltet ist, derart, dass sie in den jeweiligen Brennraum (6) während des Einlasszeitfensters (T) zwei Einspritzmengen zeitlich getrennt eindüst.

5. Verfahren zum Betreiben eines Kolbenmotors (1), insbesondere in einem Kraftfahrzeug,
- wobei der Kolbenmotor (1) eine Frischgasanlage (3) mit wenigstens einer Sammelleitung (10) aufweist, die mehrere je einen Brennraum (6) des Kolbenmotors (1) mit Frischgas versorgende Einzelleitungen (11) mit Frischgas versorgt,
- wobei jeder Zylinder (5) des Kolbenmotors (1) wenigstens ein Einlassventil (7) aufweist,
- wobei in jeder Einzelleitung (11) ein Zusatzventil (13) angeordnet ist,
- wobei die Frischgasanlage (3) stromauf der Brennräume (6) entdrosselt ist,
- bei dem während eines Teillastbetriebs des Kolbenmotors (1) eine Frischgasbeladung des jeweiligen Brennraums (6), die vom aktuellen Lastzustand des Kolbenmotors (1) abhängt, innerhalb eines Einlasszeitfensters (T), das durch ein Öffnen und Schließen des jeweiligen Einlassventils (7) begrenzt ist, in zwei Beladungsphasen (A, B) unterteilt wird, indem innerhalb des Einlasszeitfensters (T) das jeweilige Zusatzventil (13) bei einem Schließzeitpunkt (T_{S}), der vom aktuellen Lastzustand des Kolbenmotors (1) abhängt, geschlossen und danach bei einem Öffnungszeitpunkt (T_{O}), der vom aktuellen Lastzustand des Kolbenmotors (1) abhängt, geöffnet wird, **dadurch gekennzeichnet, dass**
- das jeweilige Zusatzventil (13) beim Öffnen des jeweiligen Einlassventils (7) bereits geöffnet ist und beim Schließen des jeweiligen Einlassventils (7) noch offen ist, und dass
- eine erste Einspritzmenge während der ersten Beladungsphase (A) und eine zweite Einspritzmenge während der zweiten Beladungsphase (B) eingedüst wird.

6. Verfahren nach Anspruch 5,
**dadurch gekennzeichnet,**
**dass** das jeweilige Zusatzventil (13) zwischen zwei Einlasszeitfenstern (T) des jeweiligen Einlassventils (7) offen bleibt.

7. Verfahren nach einem der Ansprüche 5 und 6,
**dadurch gekennzeichnet,**
- **dass** bei Teillastbetrieb des Kolbenmotors (1) eine durch den Schließzeitpunkt (T_{S}) und den Öffnungszeitpunkt (T_{O}) des jeweiligen Zusatzventils (13) begrenzte Beladungspause (T_{P}) mindestens 20% oder mindestens 30% oder mindestens 40% oder mindestens 50% der Zeitspanne des Einlasszeitfensters (T) beträgt, und/oder
- **dass** bei einem Volllastbetrieb des Kolbenmotors (1) das jeweilige Zusatzventil (13) synchron zum jeweiligen Einlassventil (7) geöffnet und geschlossen wird oder innerhalb des Einlasszeitfensters (T) permanent geöffnet ist oder nur geöffnet wird oder nur geschlossen wird oder nur einmal geöffnet und nur einmal geschlossen wird.

8. Verfahren nach einem der Ansprüche 5 bis 7,
**dadurch gekennzeichnet,**
**dass** Kraftstoffeinspritzdüsen (9) so angesteuert werden, dass sie in den jeweiligen Brennraum (6) während des Einlasszeitfensters (T) zwei Einspritzmengen zeitlich getrennt eindüsen.

## Claims

1. A fresh gas system for a piston engine (1), in particular in a motor vehicle,
- having at least one collecting line (10) to supply fresh gas to multiple individual lines (11),
- wherein each individual line (11) supplies fresh gas to one combustion chamber (6) and the piston engine (1),
- wherein each cylinder (5) of the piston engine (1) has at least one intake valve (7) for opening and closing a connection between the respective combustion chamber (6) and the respective individual line (11),
- wherein in each individual line (11) an additional valve (13) for opening and closing the individual line (11) is arranged upstream from the at least one intake valve (7),
- wherein the at least one collecting line (10) is unthrottled,
- wherein a control unit (14) for actuation of the additional valves (13) is designed so that it subdivides a fresh gas charge of the respective combustion chamber (6), depending on the prevailing load state of the piston engine (1) in the case of partial-load operation of the piston engine (1) and does so within an intake time window (T) that is defined by the opening and closing of the respective intake valve (7), thereby subdividing it into two charging phases (A, B); activating the respective additional valve (13) at a closing point in time (T_{S}), which depends on the prevailing load state of the piston engine (1), to close within the intake time window (T) and at a later opening point in time (To), which depends on the prevailing load state of the piston (1), activating the valve to open.
**characterized in**
- **that** the control (14) is designed so that the respective additional valve (13) is already opened on opening the respective intake valve (7) and is still open when the respective intake valve (7) is closed,
- **that** the control unit (14) is designed so that a first injection quantity is injected during the first charging phase (A) and a second injection quantity is injected during the second charging phase (B).

2. The fresh gas system according to Claim 1,
**characterized in that**
the control unit (14) is designed so that the respective additional valve (13) remains open between two successive following intake time windows (T) of the respective intake valve (7).

3. The fresh gas system according to any one of Claims 1 and 2,
**characterized in that**
- the control unit (14) is designed so that in partial-load operation of the piston engine (1) a charging pause (T_{P}) limited by the closing point in time (T_{S}) and the opening point in time (T_{O}) of the respective additional (13) amounts to at least 20% or at least 30% or at least 40% or at least 50% of the period of time of the intake time window (T), and/or
- the control unit (14) is designed so that in full-load operation of the piston engine (1), the respective additional valve (13) is opened and closed in synchronization with the respective intake valve (7) or is opened permanently or is only opened or is only closed or is opened only once and is closed only once within the intake time window (T).

4. The fresh gas system according to any one of Claims 1 through 3,
**characterized in that**
the control unit (14) is also designed for actuation of the fuel injectors (9) assigned to the cylinders (5) in such a way that it injects two injection quantities of fuel at separate points in time during the intake time window (T) in the respective combustion chamber (6).

5. A method for operating a piston engine (1), in particular in a motor vehicle,
- wherein the piston engine (1) has a fresh gas system (3) with at least one collecting line (10) which supplies fresh gas to several individual lines (11) which in turn supply fresh gas to one combustion chamber (6) each of the piston engine (1),
- wherein each cylinder (5) of the piston engine (1) has at least one intake valve (7),
- wherein an additional valve (13) is provided in each individual line (11),
- wherein the fresh gas system (3) is unthrottled upstream from the combustion chambers (6),
- whereby fresh gas charging of the respective combustion chamber (6) which depends on the prevailing load state of the piston engine (1) during partial-load operation of the piston engine (1) is subdivided into two charging phases (A, B) within an intake time window (T) that is limited by the opening and the closing of the respective intake valve (7) by the fact that the respective additional valve (13) is closed at a closing point in time (T_{S}), which depends on the current load state of the piston engine (1), within the intake time window (T) and then is opened at an opening point in time (T_{O}) that depends on the current load state of the piston (1),
**characterized in**
- **that** the respective additional valve (13) is already opened on opening the respective intake valve (7), and is still open on closing the respective intake valve (7),
- **that** a first injection quantity is injected during the first charging phase (A) and a second injection quantity is injected during the second charging phase (B).

6. The method according to Claim 5,
**characterized in that**
the respective additional valve (13) remains open between two intake time windows (T) of the respective intake valve (7).

7. The method according to any one of Claims 5 and 6, **characterized in that**
- in partial-load operation of the piston engine (1) a charging pause (T_{P}) limited by the closing point in time (T_{S}) and the opening point in time (T_{O}) of the respective additional valve (13) amounts to at least 20% or at least 30% or at least 40% or at least 50% of the period of time of the intake time window (T) and/or
- in full-load operation of the piston engine (1), the respective additional valve (13) is opened and closed in synchronization with the respective intake valve (7) or is opened permanently or is only opened or is only closed or is only opened once and only closed once within the intake time window (T).

8. The method according to any one of Claims 7 through 11, **characterized in that**
- the fuel injectors (9) are designed so that they inject two injection quantities at separate points in time into the respective combustion chamber (6) during the intake time window (T).

## Revendications

1. Installation de gaz frais pour un moteur à pistons (1), notamment dans un véhicule automobile,
- comportant au moins un collecteur (10) pour l'alimentation de plusieurs lignes individuelles (11) en gaz frais,
- dans lequel toute ligne individuelle (11) alimente une chambre de combustion (6) du moteur à pistons (1) en gaz frais,
- dans lequel tout cylindre (5) du moteur à pistons (1) dispose d'au moins une soupape d'admission (7) pour l'ouverture ou le blocage d'une connexion entre la chambre de combustion (6) et la ligne individuelle (11) qui vont ensemble,
- dans lequel toute ligne individuelle (11) en amont d'au moins une soupape d'admission (7) comporte une soupape auxiliaire (13) pour l'ouverture et le blocage de la ligne individuelle (11),
- dans lequel au moins un collecteur (10) est sans étranglement,
- dans lequel une commande (14) pour actionner les soupapes auxiliaires (13) est conçue de telle sorte que lors du fonctionnement à charge partielle du moteur à pistons (1), elle divise une charge de gaz frais de la chambre de combustion (6) respective dépendante de l'état de charge actuel du moteur à pistons (1) dans un intervalle d'admission (T) limité par l'ouverture et le blocage de la soupape d'admission (7) respective en deux phases de charge (A, B) en garantissant que dans l'intervalle d'admission (T), elle actionne la soupape auxiliaire (13) respective à un moment de blocage (T_{S}) dépendant de l'état de charge actuel du moteur à pistons (1) pour le blocage et l'actionne à un moment d'ouverture (T_{O}) dépendant de l'état de charge actuel et ultérieur du moteur à pistons (1) pour l'ouverture, **caractérisée en ce que**
- la commande (14) est conçue de telle sorte que la soupape auxiliaire (13) respective soit déjà ouverte lors de l'ouverture de la soupape d'admission (7) respective et toujours ouverte lors du blocage de la soupape d'admission (7) respective,
- dans lequel la commande (14) est conçue de telle sorte qu'une première quantité d'injection soit injectée dans la première phase de charge (A) et une deuxième quantité d'injection soit injectée dans la deuxième phase de charge (B).

2. Installation de gaz frais selon revendication 1,
**caractérisée en ce que**
la commande (14) est conçue de telle sorte que la soupape auxiliaire (13) respective reste ouverte entre deux intervalles d'admission (T) consécutifs de la soupape d'admission (7) respective.

3. Installation de gaz frais selon une des revendications 1 et 2, **caractérisée en ce que**
- la commande (14) est conçue de telle sorte que lors du fonctionnement à charge partielle du moteur à pistons (1), une pause de charge (Tₚ) limitée par le moment de blocage (Tₛ) et par le moment d'ouverture (Tₒ) de la soupape auxiliaire (13) respective soit d'au moins 20% ou d'au moins 30% ou d'au moins 40% ou d'au moins 50% de la période de l'intervalle d'admission (T), et/ou
- la commande (14) est conçue de telle sorte que lors d'une opération en pleine puissance du moteur à pistons (1), la soupape auxiliaire (13) respective soit ouverte et bloquée de manière synchrone avec la soupape d'admission (7) respective ou qu'elle soit ouverte de manière permanente lors de l'intervalle d'admission (T) ou estuniquement ouverte ou est uniquement bloquée ou n'est qu'ouverte ou bloquée qu'une seule fois.

4. Installation de gaz frais selon une des revendications 1 à 3 **caractérisée en ce que**
la commande (14) est en plus conçue de telle sorte que dans l'intervalle d'admission (T), elle injecte deux quantités d'injection temporellement espacées l'une de l'autre dans la chambre de combustion (6) respective lors de l'action des injecteurs de carburant (9) qui vont avec les cylindres (5).

5. Procédé pour l'opération d'un moteur à pistons (1), notamment dans un véhicule automobile,
- dans lequel le moteur à pistons (1) dispose d'une installation de gaz frais (3) comportant au moins un collecteur (10) qui alimente plusieurs lignes individuelles (11) en gaz frais qui, à leur tour, alimentent chacune une chambre de combustion (6) du moteur à pistons (1) en gaz frais,
- dans lequel tout cylindre (5) du moteur à pistons (1) comporte au moins une soupape d'admission (7),
- dans lequel toute ligne individuelle (11) comporte une soupape auxiliaire (13),
- dans lequel l'installation de gaz frais (3) est sans étranglement en amont des chambres de combustion (6),
- dans lequel, lors du fonctionnement à charge partielle du moteur à pistons (1), une charge de gaz frais de la chambre de combustion (6) respective, dépendante de l'état de charge actuel du moteur à pistons (1), dans un intervalle d'admission (T), limité par l'ouverture et le blocage de la soupape d'admission (7) respective, est divisée en deux phases de charge (A, B), en bloquant, dans l'intervalle d'admission (T), la soupape auxiliaire (13) respective à un moment de blocage (Tₛ), dépendant de l'état de charge actuel du moteur à pistons (1), et en l'ouvrant ultérieurement à un moment d'ouverture (Tₒ), dépendant de l'état de charge actuel du moteur à pistons (1). Le procédé est **caractérisé en ce que**
- la soupape auxiliaire respective (13) est déjà ouverte lors de l'ouverture de la soupape d'admission (7) respective et **en ce qu'**elle est toujours ouverte lors du blocage de la soupape d'admission (7) respective et **en ce qu'**
- une première quantité d'injection est injectée dans la première phase de charge (A) et une deuxième quanité d'injection est injectée dans la deuxième phase de charge (B).

6. Procédé selon revendication 5,
est **caractérisé en ce que**
la soupape auxiliaire (13) respective reste ouverte entre deux intervalles d'admission (T) de la soupape d'admission (7) respective.

7. Procédé selon une des revendications 5 et 6 **caractérisé en ce que**
- lors du fonctionnement à charge partielle du moteur à pistons (1), une pause de charge (Tₚ) limitée par le moment de blocage (Tₛ) et le moment d'ouverture (Tₒ) de la soupape auxiliaire (13) respective, est d'au moins 20% ou d'au moins 30% ou d'au moins 40% ou d'au moins 50% de la période de l'intervalle d'admission (T), et/ou
- lors de l'opération en pleine puissance du moteur à pistons (1), la soupape auxiliaire (13) respective est ouverte et bloquée de manière synchrone avec la soupape d'admission (7) respective ou qu'elle est ouverte de manière permanente dans l'intervalle d'admission (T) ou est uniquement ouverte ou est uniquement bloquée ou n'est ouverte qu'une seule fois ou n'est bloquée qu'une seule fois.

8. Procédé selon une des revendications 5 à 7, est
**caractérisé en ce que**
les injecteurs de carburant (9) sont commandés de telle sorte qu'ils injectent deux quantités d'injection temporellement espacées l'une de l'autre dans la chambre de combustion (6) respective dans l'intervalle d'admission (T).
